# DEMANDE DE BREVET EUROPEEN

(11) **EP 0 936 773 A1**
(43) Date de publication de la demande: **18.08.1999**
(21) Numéro de dépôt: 99400322.6
(22) Date de dépôt: 11.02.1999
(51) Int. Cl.: H04L 7/00

(54) **Procédé et dispositif de resynchronisation de signaux optiques**

(30) Priorité: 12.02.1998 FR 9801675
(71) Demandeur: ALCATEL, 75008 Paris (FR)
(72) Inventeur: Brindel, Patrick, 91310 Longpont S/Orge (FR); Ducellier, Thomas, Ottawa, Ontario K1N5E5 (CA)
(74) Mandataire: Fournier, Michel

(57) **Abrégé**

Pour resynchroniser des signaux optiques d'entrée (E1, E2) portés par des fréquences optiques f1 et f2 différentes, on créé un signal optique retardé (S2) en appliquant un retard ajustable (DT) à l'un de ces signaux (E2).

Le procédé consiste :
- à former un signal de combinaison (s3) en couplant des signaux optiques de mesure (s1, s2) respectivement du signal retardé (S2) et de l'autre signal d'entrée (E1),
- à former un signal de mélange (M0) en injectant ce signal de combinaison (s3) dans un dispositif optique non linéaire (2),
- à former un signal filtré (M) du signal de mélange (M0) au moyen d'un filtre (F) calé sur une fréquence optique f3 égale à p.f1 + q.f2, p et q étant des nombres entiers relatifs tels que la fréquence f3 soit différente des fréquences f1 et f2 des ondes porteuses,
- à commander le retard ajustable (DT) en fonction d'un signal électrique de contrôle (C) représentatif de la valeur moyenne de l'intensité du signal filtré (M).

Application notamment aux systèmes de communication optiques à multiplexage en longueur d'onde.

## Description

L'invention se situe dans le domaine des réseaux de télécommunication et concerne plus particulièrement les systèmes de communication optiques dans lesquels s'effectuent la transmission, le routage et le traitement optiques de données numériques optiques.

Généralement, les informations véhiculées dans ces systèmes sont des données binaires ayant la forme d'impulsions rythmées à une fréquence d'horloge de modulation déterminée. Les niveaux d'amplitude de ces impulsions sont représentatifs de ces données binaires. Initialement, ces impulsions sont sous forme électrique, puis elles sont converties en un signal optique au moyen d'une modulation d'intensité (puissance optique) d'une onde porteuse optique.

Pour que le système puisse transporter un grand nombre de signaux optiques en exploitant la bande passante des liaisons optiques, on utilise des techniques de multiplexage telles que le multiplexage temporel et/ou le multiplexage en longueur d'onde.

D'une façon générale, dans la plupart des systèmes de communication optiques impliquant plusieurs longueurs d'onde, il est souhaitable, au moins en certains points du réseau, que plusieurs signaux optiques présentent des modulations d'intensité qui respectent des relations de phase parfaitement définies (à 2π près).

Ce problème se pose par exemple dans les noeuds de jonction où plusieurs signaux optiques portés par des longueurs d'onde différentes et issus de sources indépendantes doivent être parfaitement synchronisés avant d'être combinés pour former un multiplex de longueurs d'onde.

Un problème analogue se pose lorsqu'on veut régénérer simultanément des trains de solitons multiplexés en longueur d'onde au moyen d'un modulateur. Pour cela, il faut en effet resynchroniser les trains de solitons avant de les injecter dans le modulateur et commander ce dernier par un signal d'horloge synchrone avec celles des trains de solitons.

Un autre cas est celui des interfaces de multiplexage temporel où plusieurs signaux optiques sont entrelacés temporellement avant d'être combinés pour former le multiplex temporel.

Une solution envisageable consiste à récupérer les horloges associées aux différents signaux à synchroniser, à comparer leurs phases et à appliquer aux signaux des retards fonction de ces comparaisons. Cette solution présente cependant l'inconvénient de nécessiter plusieurs récupérations d'horloge

Aussi, un des buts de l'invention est de proposer une solution au problème de synchronisation qui évite l'inconvénient précédent. Un autre but est de permette une mise en oeuvre simple aussi bien pour la partie optique qu'au niveau des circuits électroniques associés.

Plus précisément, l'invention a pour objet un procédé de resynchronisation de signaux optiques selon lequel un retard ajustable est appliqué à l'un parmi des premier et second signaux optiques d'entrée pour fournir un signal optique retardé calé en phase par rapport à l'autre signal optique d'entrée, lesdits premier et second signaux optiques d'entrée véhiculant des informations par modulations d'intensité d'ondes porteuses optiques ayant des fréquences optiques f1 et f2 différentes, ledit procédé étant caractérisé en ce qu'il consiste :
- à former des premier et second signaux optiques de mesure représentatifs respectivement dudit signal optique retardé et dudit autre signal optique d'entrée,
- à former un signal de combinaison en couplant lesdits premier et second signaux optiques de mesure,
- à former un signal de mélange en injectant ledit signal de combinaison dans un dispositif optique non linéaire,
- à former un signal filtré en filtrant ledit signal de mélange par un filtre calé sur une fréquence optique f3 égale à p.f1 + q.f2, p et q étant des nombres entiers relatifs tels que la fréquence f3 soit différente des fréquences f1 et f2 des ondes porteuses,
- à former un signal électrique de contrôle représentatif de la valeur moyenne de l'intensité dudit signal filtré et
- à commander ledit retard ajustable en fonction dudit signal de contrôle.

Ainsi, le procédé exploite la propriété des milieux optiques non linéaires d'être le siège de phénomènes d'intermodulation lorsque par exemple deux signaux optiques de fréquences porteuses différentes f1, f2 y sont introduits. Le milieu engendre alors des signaux d'intermodulation portés par des fréquences optiques de la forme p.f1 + q.f2, p et q étant dans le cas général des nombres entiers relatifs qui rendent bien entendu l'expression précédente positive. L'amplitude de la modulation de chacun de ces signaux est notamment représentative de l'écart entre les phases des signaux introduits. Les essais ont montré que la valeur moyenne de l'intensité d'un signal d'intermodulation choisi représente bien cet écart de phase.

Le procédé s'effectue en partie dans le domaine optique et en partie dans le domaine électrique avec l'avantage que le traitement dans le domaine électrique ne nécessite aucun circuit devant travailler à haute fréquence, ce qui simplifie considérablement la réalisation.

Le procédé défini ci-dessus permet aussi de resynchroniser plus de deux signaux. Il suffit par exemple d'appliquer le procédé à deux premiers signaux, ce qui fournit deux signaux de sortie resynchronisés, puis d'appliquer à nouveau le procédé à un troisième signal et à l'un des deux premiers signaux de sortie resynchronisés, et ainsi de suite.

Selon une variante préférée, lesdits nombres p et q sont tels que l'écart entre ladite fréquence f3 du filtre et l'une des fréquences f1 ou f2 des ondes porteuses soit égal à l'écart entre lesdites fréquences f1 et f2 des ondes porteuses.

Cette dernière disposition assure que la fréquence f3 est voisine des fréquences f1 et f2, c'est-à-dire se situe dans la gamme usuelle des fréquences optiques utilisée en transmission. Ainsi les éléments optiques traitant le signal de mélange (filtre, photodétecteur) peuvent être de types conventionnels.

Selon un autre aspect de l'invention, le procédé est en outre caractérisé en ce que lesdits premier et second signaux optiques de mesure sont prélevées respectivement dudit signal optique retardé et dudit autre signal optique d'entrée et en ce que ledit signal de combinaison est amplifié optiquement avant d'être injecté dans un milieu optique non linéaire.

Selon encore un autre aspect, ledit signal électrique de contrôle est obtenu par un filtrage passe-bas électrique d'un signal converti fourni par un photodétecteur auquel est appliqué ledit signal filtré.

L'invention a également pour objet un dispositif de resynchronisation de signaux optiques pour la mise en oeuvre du procédé définit ci-dessus. Le dispositif de resynchronisation comporte un dispositif à retard ajustable disposé pour recevoir l'un parmi des premier et second signaux optiques d'entrée et apte à fournir un signal optique retardé calé en phase par rapport à l'autre signal optique d'entrée, lesdits premier et second signaux optiques d'entrée véhiculant des informations par modulations d'intensité d'ondes porteuses optiques ayant des fréquences optiques f1 et f2 différentes. Le dispositif est caractérisé en ce qu'il comprend :
- des moyens de prélèvement pour former des premier et second signaux optiques de mesure représentatifs respectivement dudit signal optique retardé et dudit autre signal optique d'entrée,
- des moyens de couplage disposés pour recevoir lesdits premier et second signaux optiques de mesure et apte à fournir un signal de combinaison,
- un dispositif optique non linéaire disposé pour recevoir ledit signal de combinaison et apte à fournir un signal de mélange,
- un filtre disposé pour recevoir ledit signal de mélange et apte à fournir un signal filtré, ledit filtre étant calé sur une fréquence optique f3 égale à p.f1 + q.f2, p et q étant des nombres entiers relatifs tels que la fréquence f3 soit différente des fréquences f1 et f2 des ondes porteuses,
- un dispositif de conversion pour former un signal électrique de contrôle représentatif de la valeur moyenne de l'intensité dudit signal filtré et
- des moyens de commande pour commander ledit dispositif à retard ajustable en fonction dudit signal de contrôle.

D'autres aspects et avantages de l'invention apparaîtront dans la suite de la description en référence aux figures.
- La figure 1 représente un mode de réalisation du dispositif de resynchronisation selon l'invention.
- Les figures 2 et 3 sont des courbes représentant les variations relatives du signal de contrôle en fonction du décalage entre les phases des signaux optiques.
- La figure 4 représente un montage pour resynchroniser entre eux plus de deux signaux optiques et dans lequel est utilisé le dispositif selon l'invention.

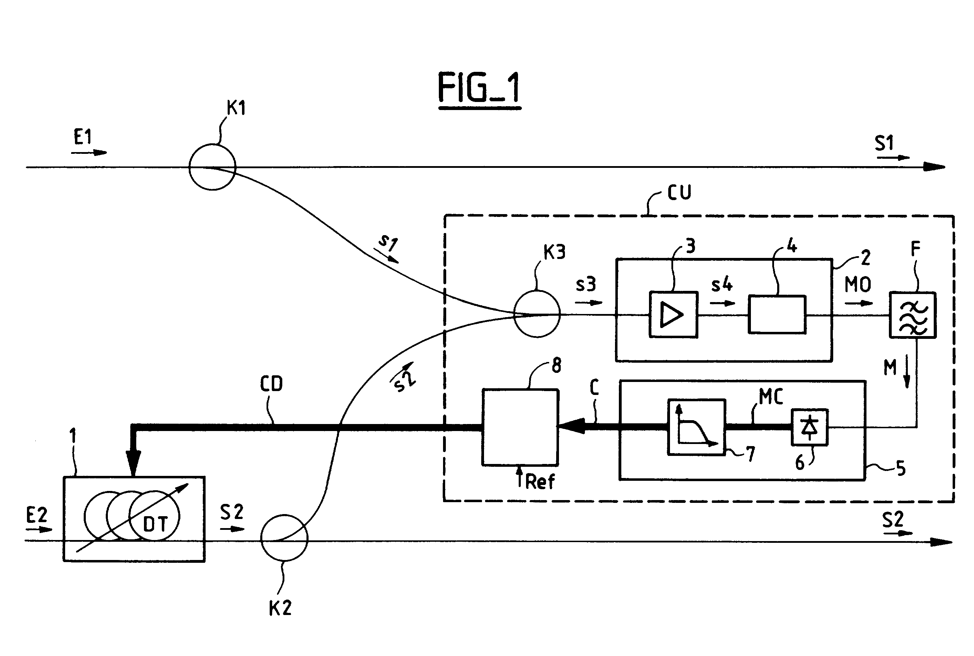

Le dispositif de resynchronisation représenté sur la figure 1 est constitué d'un dispositif à retard ajustable 1, de deux coupleurs 1 vers 2 K1, K2 et d'une unité de commande CU.

Le dispositif reçoit les signaux d'entrée E1, E2 et fournit des signaux de sortie resynchronisés S1, S2. Le premier signal d'entrée El est appliqué à l'entrée du premier coupleur 1 vers 2 K1 dont la première sortie fournit le premier signal de sortie S1 et dont la deuxième sortie couplée à l'unité de commande CU délivre un premier signal optique de mesure sl. Le second signal d'entrée E2 est appliqué à l'entrée du second coupleur K2 par l'intermédiaire du dispositif à retard 1. Une première sortie du coupleur K2 fournit le second signal de sortie S2 tandis que sa seconde sortie fournit un second signal optique de mesure s2 appliqué à l'entrée de l'unité de commande CU.

L'unité de commande CU comporte un coupleur 2 vers 1 K3 dont les entrées reçoivent respectivement les premiers et second signaux optiques de mesure s1, s2. La sortie du coupleur K3 fournit un signal de combinaison s3 qui est injecté dans un dispositif optique non linéaire 2. Le dispositif 2 fournit un signal de mélange MO à un filtre optique F qui délivre un signal filtré M à un dispositif de conversion 5. Le dispositif de conversion 5 fournit à un dispositif de commande 8 un signal électrique de contrôle C représentatif de la valeur moyenne de l'intensité du signal filtré M. En réponse au signal C, le dispositif de commande 8 fournit un signal électrique de commande CD du dispositif à retard ajustable 1.

Dans l'exemple représenté, le dispositif optique non linéaire 2 est constitué d'un amplificateur optique à fibre 3 couplé à un milieu optique non linéaire 4. Comme les signaux de mesure sl et s2 prélevés des signaux d'entrée E1 et E2 présentent des puissances optiques relativement faibles, l'amplificateur 3 a pour fonction d'injecter dans le milieu non linéaire 4 une puissance optique suffisante pour faire apparaître les phénomènes d'intermodulation recherchés. Le milieu non linéaire 4 le plus approprié est typiquement constitué d'un amplificateur optique semi-conducteur pour lequel une puissance optique d'entrée de l'ordre du milliwatt peut convenir. On pourrait cependant utiliser d'autres milieux présentant des propriétés non linéaires dues à l'effet Kerr, comme par exemple les fibres optiques.

Il est par ailleurs préférable que les signaux optiques de mesure s1, s2 présentent la même polarisation. Au cas où les signaux reçus auraient des polarisations différentes, on pourra toujours prévoir en amont du dispositif un contrôleur de polarisation de type connu (non représenté).

Le dispositif de conversion 5 est constitué d'un photodétecteur 6, par exemple une photodiode, suivi d'un filtre électrique passe-bas 7.

Le dispositif de la figure 1 fonctionne de la façon suivante. Le premier signal optique d'entrée E1 est reçu par le premier coupleur K1 qui prélève une partie S1 de la puissance de ce signal. Cette partie S1 est guidée vers une des entrées du coupleur 2 vers 1 K3. Le second signal d'entrée E2 traverse le dispositif à retard 1 pour constitué un signal retardé S2 qui est injecté à l'entrée du second coupleur 1 vers 2 K2. Le coupleur K2 prélève une partie s2 de la puissance de ce signal S2 et cette partie s2 est guidée vers l'autre entrée du coupleur K3. Le coupleur K3 fournit alors un signal de combinaison s3 des signaux sl et s2. Le signal de combinaison s3 est amplifié par l'amplificateur 3 de façon à fournir un signal de combinaison amplifiée s4 au milieu non linéaire 4.

Les porteuses des signaux d'entrée E1 et E2 ayant des fréquences optiques f1 et f2 supposées différentes, le milieu non linéaire 4 fournit un signal de mélange MO contenant des signaux d'intermodulation dont les fréquences optiques sont de la forme p.f1 + q.f2, où p et q sont des nombres entiers relatifs (et tels que l'expression soit positive). Chacun des signaux d'intermodulation présente une modulation d'intensité qui dépend à la fois des modulations d'intensité des signaux d'entrées et du décalage de phase de leurs horloges de modulation respectives. Le signal de mélange MO traverse alors le filtre F qui est choisi pour transmettre une bande de fréquence optique centrée sur une seule des fréquences d'intermodulation f3 et différente de f1 et de f2. Le filtre F fournit le signal filtré M qui représente donc un seul des signaux d'intermodulation.

Le photodétecteur 6 reçoit le signal filtré M et fournit au filtre passe-bas électrique 7 un signal électrique de détection MC. Le filtre passe-bas 7 délivre le signal électrique de contrôle C qui mesure l'intensité optique moyenne du signal filtré M et est par conséquent représentatif du décalage entre les phases des horloges de modulation des signaux E1 et S2. Le signal C peut alors être traité par un dispositif électronique de commande de type conventionnel 8 conçu pour piloter le dispositif à retard 1 en fonction du signal C de façon à imposer un décalage de phase déterminé par une consigne Ref.

Le choix des valeurs de p et q qui définit le filtre F sera guidé par les considérations suivantes. La condition nécessaire est que la fréquence f3 soit différente à la fois de f1 et f2, mais il est aussi souhaitable que la fréquence f3 soit dans la même gamme de fréquence que f1 et f2 de façon à pouvoir utiliser un filtre F et un photodétecteur 6 conventionnels. Compte tenu du fait que l'écart entre f1 et f2 est en pratique très petit par rapport à f1 ou f2, on aura f3 voisin de f1 et f2 si on respecte la relation p + q = 1, avec des valeurs absolues de p et q de faibles valeurs.

Il convient aussi de tenir compte des propriétés du milieu non linéaire utilisé en choisissant p et q pour que la puissance du signal d'intermodulation correspondant soit la plus élevée possible. Ainsi, dans le cas où le milieu non linéaire est un amplificateur optique semi-conducteur la plus forte puissance est obtenue pour p = 2 et q = -1 ou bien pour q = 2 et p = -1.

Un autre aspect de réalisation concerne la fonction de filtrage réalisée par le dispositif de conversion 5 de façon à constituer un dispositif de mesure de la valeur moyenne de l'intensité optique du signal filtré M. La constante de temps du dispositif de conversion 5 doit être suffisante pour effectuer cette moyenne. Dans chaque cas particulier elle pourra être évaluée expérimentalement ou par simulations. Ainsi, pour les cas usuels de transmission optique, on pourra par exemple choisir une constante de temps de l'ordre de l'intervalle de temps correspondant à la transmission de quelques milliers de bits des signaux d'entrée.

En pratique, le photodétecteur 6 peut déjà réaliser une fonction de filtrage passe-bas, complétée si nécessaire par un filtre passe-bas électrique supplémentaire 7, comme représenté dans l'exemple de la figure 1.

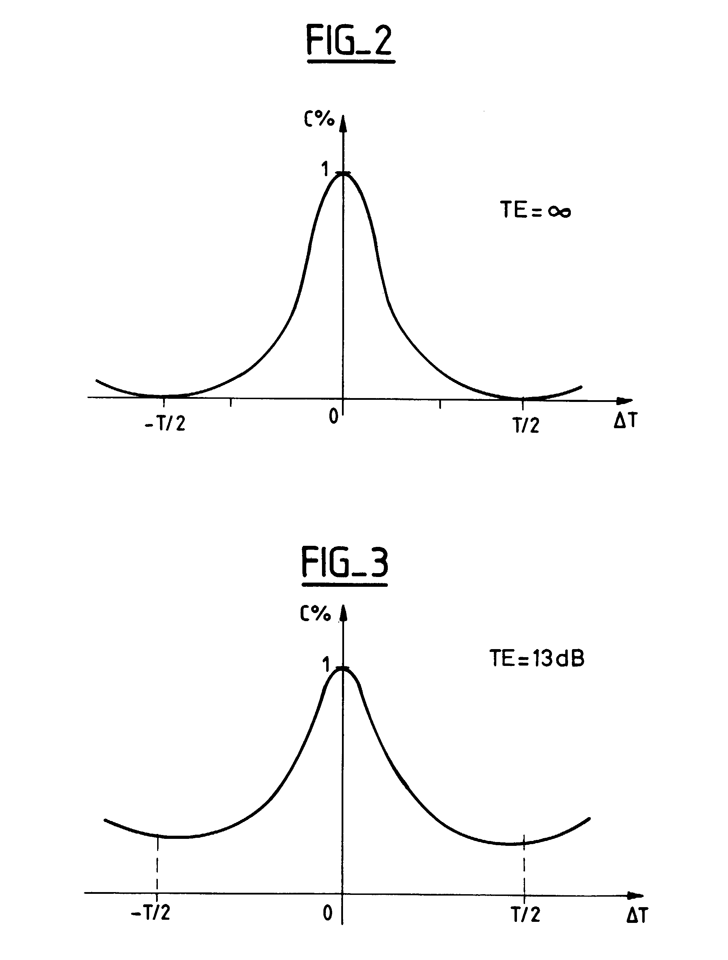

Des exemples de relation entre le décalage temporel ΔT entre deux fronts d'horloges successifs des signaux E1 et E2 et le signal C fournit par le dispositif 5 sont illustrés par les figures 2 et 3.

La courbe de la figure 2 représente en pourcentage le niveau du signal électrique de contrôle C en fonction de ΔT dans le cas où le taux d'extinction des signaux E1 et E2 est très élevé. La figure 3 représente une courbe analogue pour un taux d'extinction TE de 13dB. Ces courbes montrent que le signal C présente une valeur maximale lorsque le décalage ΔT est nul et une valeur minimale lorsque ΔT vaut la moitié de l'intervalle de temps bit T des signaux E1 et E2.

Ainsi, pour chaque cas particulier, des simulations par exemple permettent d'établir la loi de variation C en fonction de ΔT. Cette loi établit donc par rapport à ΔT la fonction de transfert de l'ensemble constitué par les dispositifs 2 et 5 en cascade. Il est alors aisé de concevoir un circuit de commande 8 apte à commander le dispositif à retard 1 de façon à imposer une valeur déterminée (à T près) du décalage ΔT.

Toutefois, pour échapper à l'influence du taux d'extinction TE sur la loi de variation de C, on aura intérêt à concevoir un dispositif de commande 8 ayant pour effet d'asservir C à sa valeur maximale. Si nécessaire, on pourra toujours imposer un décalage déterminé entre les phases des deux signaux de sortie S1 et S2 en disposant un dispositif à retard supplémentaire (non représenté) en sortie de l'un des coupleurs K1 ou K2. Dans ce cas, une réalisation du dispositif de commande 8 peut être un circuit bien connu dans le domaine de la régulation qui superpose à au signal de commande CD une surmodulation à basse fréquence et ajuste ce signal de commande CD de façon à rendre minimum la modulation du signal de contrôle C qui en résulte.

Le dispositif à retard variable 1 peut être un des dispositifs à réglage fin couramment employés dans les systèmes optiques. Par exemple, un tel dispositif utilise une bobine de fibre optique, dont le diamètre peut être modifié par un actionneur piézo-électrique.

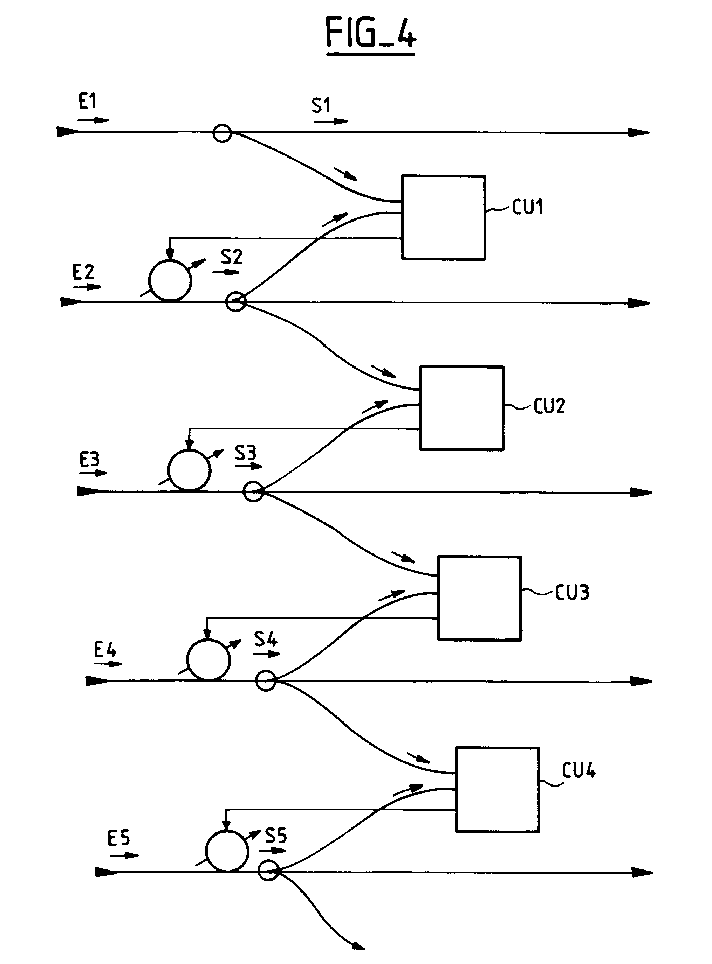

La figure 4 illustre comment le dispositif de resynchronisation selon l'invention peut être utilisé pour resynchroniser entre eux plus de deux signaux optiques, par exemples des signaux extraits d'un multiplex de longueurs d'onde par démultiplexage.

Le montage représenté est organisé en plusieurs étages recevant à titre d'exemple cinq signaux d'entrée E1-E5 et fournissant cinq signaux de sorties resynchronisés S1-S5. Les deux premiers signaux d'entrées E1, E2 sont resynchronisés par le premier étage qui fournit le deuxième signal de sortie S2 au moyen d'une première unité de commande CU1 disposée conformément à la figure 1 décrite précédemment. Un second étage comportant une seconde unité de commande CU2 resynchronise le troisième signal d'entrée E3 par rapport au second signal de sortie S2 en fournissant le troisième signal de sortie S3. De même, une troisième unité de commande CU3 resynchronise S3 et E4 et une quatrième unité de commande CU4 resynchronise S4 et E5. La seule adaptation à prévoir par rapport au schéma de la figure 1 consiste à prévoir des coupleurs 1 vers 3 en sortie des dispositifs à retard de chaque étage de façon à prélever chaque signal retardé S2-S5 à destination de deux unités de commandes.

Il convient de noter que le dispositif qui vient d'être décrit est particulièrement efficace dans le cas où les modulations des signaux E1 et E2 sont de type RZ ou de type soliton. Le dispositif est néanmoins utilisable pour des modulations NRZ si les signaux d'entrée présentent des séquences ayant un grand nombre de transition à la fréquence bit. De telles séquences peuvent par exemple être envoyées volontairement au cours de l'initialisation du système.

Il faut aussi signaler que le dispositif n'est pas limité au cas où les fréquences d'horloges des signaux d'entrée sont égales. Le dispositif peut fonctionner aussi si les signaux d'entrée possèdent chacun une période d'horloge multiple entier d'une période de base commune. La courbe représentant les variations du signal de contrôle C en fonction de ΔT présentent alors plusieurs valeurs maximales d'amplitudes différentes. Cette courbe peut être cependant exploitée par des moyens de commande 8 adaptés.

## Revendications

1. Procédé de resynchronisation de signaux optiques selon lequel un retard ajustable (DT) est appliqué à l'un parmi des premier et second signaux optiques d'entrée (E1, E2) pour fournir un signal optique retardé (S2) calé en phase par rapport à l'autre signal optique d'entrée (E1), lesdits premier et second signaux optiques d'entrée (E1, E2) véhiculant des informations par modulations d'intensité d'ondes porteuses optiques ayant des fréquences optiques f1 et f2 différentes, ledit procédé étant caractérisé en ce qu'il consiste :
- à former des premier et second signaux optiques de mesure (s1, s2) représentatifs respectivement dudit signal optique retardé (S2) et dudit autre signal optique d'entrée (E1),
- à former un signal de combinaison (s3) en couplant lesdits premier et second signaux optiques de mesure (s1, s2),
- à former un signal de mélange (M0) en injectant ledit signal de combinaison (s3) dans un dispositif optique non linéaire (2),
- à former un signal filtré (M) en filtrant ledit signal de mélange (M0) par un filtre (F) calé sur une fréquence optique f3 égale à p.f1 + q.f2, p et q étant des nombres entiers relatifs tels que la fréquence f3 soit différente des fréquences f1 et f2 des ondes porteuses,
- à former un signal électrique de contrôle (C) représentatif de la valeur moyenne de l'intensité dudit signal filtré (M) et
- à commander ledit retard ajustable (DT) en fonction dudit signal de contrôle (C).

2. Procédé selon la revendication 1, caractérisé en ce que lesdits nombres p et q sont tels que l'écart entre ladite fréquence f3 du filtre (F) et l'une des fréquences f1 ou f2 des ondes porteuses soit égal à l'écart entre lesdites fréquences f1 et f2 des ondes porteuses.

3. Procédé selon l'une des revendications 1 ou 2, caractérisé en ce que lesdits premier et second signaux optiques de mesure (s1, s2) sont prélevées respectivement dudit signal optique retardé (S2) et dudit autre signal optique d'entrée (E1) et en ce que ledit signal de combinaison (s3) est amplifié optiquement avant d'être injecté dans un milieu optique non linéaire (4).

4. Procédé selon l'une des revendications 1 à 3, caractérisé en ce que ledit signal électrique de contrôle (C) est obtenu par un filtrage passe-bas électrique d'un signal converti (MC) fourni par un photodétecteur (6) auquel est appliqué ledit signal filtré (M).

5. Dispositif de resynchronisation de signaux optiques comportant un dispositif à retard ajustable (1) disposé pour recevoir l'un parmi des premier et second signaux optiques d'entrée (E1, E2) et apte à fournir un signal optique retardé (S2) calé en phase par rapport à l'autre signal optique d'entrée (E1), lesdits premier et second signaux optiques d'entrée (E1, E2) véhiculant des informations par modulations d'intensité d'ondes porteuses optiques ayant des fréquences optiques f1 et f2 différentes, ledit dispositif étant caractérisé en ce qu'il comprend :
- des moyens de prélèvement (K1, K2) pour former des premier et second signaux optiques de mesure (s1, s2) représentatifs respectivement dudit signal optique retardé (S2) et dudit autre signal optique d'entrée (E1),
- des moyens de couplage (K3) disposés pour recevoir lesdits premier et second signaux optiques de mesure (s1, s2) et apte à fournir un signal de combinaison (s3),
- un dispositif optique non linéaire (2) disposé pour recevoir ledit signal de combinaison (s3) et apte à fournir un signal de mélange (M0),
- un filtre (F) disposé pour recevoir ledit signal de mélange (M0) et apte à fournir un signal filtré (M), ledit filtre (F) étant calé sur une fréquence optique f3 égale à p.f1 + q.f2, p et q étant des nombres entiers relatifs tels que la fréquence f3 soit différente des fréquences f1 et f2 des ondes porteuses,
- un dispositif de conversion (5) pour former un signal électrique de contrôle (C) représentatif de la valeur moyenne de l'intensité dudit signal filtré (M) et
- des moyens de commande (8) pour commander ledit dispositif à retard ajustable (1) en fonction dudit signal de contrôle (C).

6. Dispositif selon la revendication 5, caractérisé en ce que lesdits nombres p et q sont tels que l'écart entre ladite fréquence f3 du filtre (F) et l'une des fréquences f1 ou f2 des ondes porteuses soit égal à l'écart entre lesdites fréquences f1 et f2 des ondes porteuses.

7. Dispositif selon l'une des revendications 5 ou 6, caractérisé en ce que lesdits moyens de prélèvement (K1, K2) sont des coupleurs 1 vers 2 disposés respectivement pour recevoir ledit signal optique retardé (S2) et ledit autre signal optique d'entrée (E1) et pour fournir respectivement lesdits premier et second signaux optiques de mesure (s1, s2) et en ce que ledit dispositif optique non linéaire (2) est constitué d'un amplificateur optique couplé à un milieu optique non linéaire (4), ledit amplificateur étant disposé pour recevoir ledit signal de combinaison (s3) et pour fournir un signal de combinaison amplifié (s4) audit milieu optique non linéaire (4).

8. Dispositif selon la revendication 7, caractérisé en ce que ledit milieu optique non linéaire (4) est un amplificateur optique semi-conducteur.

9. Dispositif selon l'une des revendications 5 à 8, caractérisé en ce que ledit dispositif de conversion (5) est constitué d'un photodétecteur relié à un filtre passe-bas électrique (7), ledit photodétecteur étant disposé pour recevoir ledit signal filtré (M).

10. Utilisation du dispositif selon l'une des revendications 5 à 9 pour resynchroniser entre eux des signaux optiques constituant un multiplex de longueurs d'onde.
